# EUROPEAN PATENT SPECIFICATION

(11) **EP 2 668 222 B1**
(45) Date of publication and mention of the grant of the patent: **25.03.2015**
(21) Application number: 11785812.6
(22) Date of filing: 17.10.2011
(51) Int. Cl.: C08G 59/18

(54) **EPOXY-ADDUCT HARDENING AGENTS**
EPOXID-ADDUKT HÄRTER
DURCISSEUR A BASE D'UN ADDUIT D' EPOXY

(30) Priority: 28.01.2011 US 201161437310 P
(43) Date of publication of application: 04.12.2013
(73) Proprietor: Dow Global Technologies LLC, Midland, MI 48674 (US)
(72) Inventor: SCHROTZ, Markus, 88416 Ochsenhausen (DE); FRITSCHE, Christina, 88436 Eberhardzell (DE); PFARHERR, Marcus, BW 88441 Mittelbiberach (DE); GAEBEL, Juergen, BW 88471 Laupheim (DE)
(74) Representative: Beck Greener
(86) International application number: PCT/US2011/001766
(87) International publication number: WO 2012/102693

(56) References cited:
- EP-A1- 0 368 459
- US-A- 4 197 389
- US-A- 5 489 630
- US-A1- 2004 134 163

## Description

### Field of Disclosure

Embodiments of the present disclosure are directed hardening agents; more specifically, embodiments are directed toward epoxy-adduct hardening agents, methods of forming the epoxy-adduct hardening agents and curable compositions that include the epoxy-adduct hardening agents.

### Background

Curable compositions may consist of two components that can chemically react with each other to form a cured epoxy. The first component may be an epoxy resin and the second component may be a hardening agent, sometimes called a curing agent. Epoxy resins include compounds that contain one or more epoxide groups. An epoxide group refers to a group which an oxygen atom is directly attached to two adjacent or non-adjacent carbon atoms of a carbon chain or ring system. The hardening agents include compounds that are reactive with the epoxide groups of the epoxy resins.

The epoxy resins can be crosslinked, also referred to as curing, by the chemical reaction of the epoxide groups and the compounds of the hardening agent. This curing converts the epoxy resins, which have a relatively low molecular weight, into relatively high molecular weight materials by chemical addition of the compounds of the hardening agent. The hardening agent can contribute to the properties of the cured epoxy.

Curable compositions may be employed in a variety of applications. For example, a curable composition may be employed in a grout, also referred to as a bonding material. In various applications, grout can be used to fill the space or gaps between tiles, e.g., ceramic tiles and other types of tiles, that have been arranged in an edge-to-edge pattern with spaces or gaps between the edges of the tiles.

For applications with tiles, it is desirable that a grout has one or more particular properties. Examples of such properties include workability, stain resistance, the ability to completely fill the space between the tiles, providing a uniform look (e.g., color and consistency) and water cleanability. Of these properties, water cleanability can be an important consideration when selecting a grout. One reason water cleanability can be an important consideration relates to the installation of the tile and the grout. Grout can be installed after the tiles are firmly set. During this operation, the grout is "floated" into the joints between the adjacent tile edges. In addition to filling the joints between the tiles during this process, the grout also adheres to and/or forms a film on the tile face (e.g., the visible surface of the tile). For aesthetic and functional reasons the grout and/or the film on the tile face needs to be removed. Removal of the grout and/or the film on the tile face should, however, be done without damaging the grout filling the joints between the tiles. So, it is desirable to have a grout that provides a water cleanability for the tiles while helping to minimize any damage to the grout filling the joints between the tiles.

### Summary

One or more embodiments of the present disclosure include an epoxy-adduct hardening agent formed as a reaction product of a first adduct and a second adduct, where the first adduct is formed as a reaction product of a first epoxy resin and a polyether monoamine and the second adduct is formed as a reaction product of an ethyleneamine and a glycidyl ether.

One or more embodiments of the present disclosure include a curable composition that includes an epoxy resin and the epoxy-adduct hardening agent as provided herein.

One or more embodiments of the present disclosure also include a product obtained by curing the curable composition of the present disclosure. One or more embodiments of the present disclosure further include a method of forming the epoxy-adduct hardening agent of the present disclosure, where the method includes forming a first adduct as a reaction product of the first epoxy resin and the polyether monoamine; forming a second adduct as a reaction product of an ethyleneamine and a glycidyl ether; and forming the epoxy-adduct hardening agent by reacting the first adduct and the second adduct.

The above summary of the present disclosure is not intended to describe each disclosed embodiment or every implementation of the present disclosure. The description that follows more particularly exemplifies illustrative embodiments. In several places throughout the application, guidance is provided through lists of examples, which examples can be used in various combinations. In each instance, the recited list serves only as a representative group and should not be interpreted as an exclusive list.

### Detailed Description

Embodiments of the present disclosure provide epoxy-adduct hardening agents. The epoxy-adduct hardening agents may be formed as a reaction product of a first adduct and a second adduct, where the first adduct is formed as a reaction product of a first epoxy resin and a polyether monoamine and the second adduct is formed as a reaction product of an ethyleneamine and a glycidyl ether.

Surprisingly, it has been found that curable compositions, which include the epoxy-adduct hardening agents as disclosed herein, have an improved water cleanablity, as compared to other curable compositions. Water cleanablity refers to a property whereby a portion of a curable composition that has been applied to a surface may be removed with water within a particular interval of time. For example, in applications where the curable composition is used in a grout or joint filler, excess grout and/or a film formed from the grout on the tile face (residual portions of the curable composition on a tile surface) is water cleanable for up to 60 minutes after applying the grout to the tiles.

Additionally, the curable composition of the present disclosure can help to provide a variety of desirable properties in products formed with the curable composition. Examples of such desirable properties include, but are not limited to, chemical resistance, water permeability, inert/non-toxic (e.g. for potable water applications), physical and thermal stability, adhesive properties, and pot life/gel time properties. Many of these properties may be importance in grout applications, where the curable composition of the present disclosure has been found to have particularly desirable results.

As discussed herein, the epoxy-adduct hardening agents of the present disclosure may be formed as a reaction product of a first adduct and a second adduct. An adduct is a compound that is formed from a combination of two or more separate compounds. The combination can be a chemical reaction, such as an addition reaction. A compound is a substance composed of atoms or ions of two or more elements in chemical combination. The two or more separate compounds may be combined such that there is change in connectivity, but no loss of atoms within the compounds.

In one or more embodiments, the first adduct is formed as a reaction product of a first epoxy resin and a polyether monoamine. Polyether monoamines may be represented by the following Formula I:

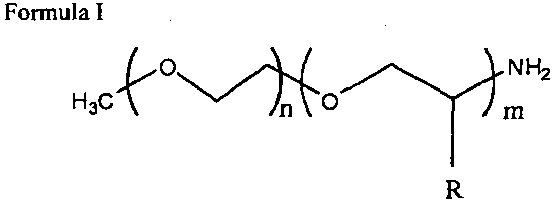

For Formula I, each R is independently a hydrogen atom or a C₁-C₆ alkyl group; n represents an integer of 1 through 19; and m represents an integer of 3 through 9. Polyether monoamines may be prepared by a reaction of a mono-alcohol initiator with ethylene oxide and/or propylene oxide. Thereafter, the resulting terminal hydroxyl groups may be converted to amines.

The polyether monoamine may have molecular weight with a lower limit of 300, 400, 500 or 750 to an upper limit of 1250, 2000, 2500 or 3000, where a range having combinations of the lower limit and upper limit are possible. For example, the polyether monoamine may have a molecular weight of 300 to 3000; 400 to 2500; 500 to 2000 or 750 to 1250. For one or more embodiments, the polyether monoamine may have a molecular weight of 600. For one or more embodiments, the polyether monoamine may have a molecular weight of 1,000. Herein, unless indicated otherwise molecular weight is weight average molecular weight. Herein, the recitations of numerical ranges by endpoints include all numbers subsumed within that range (e.g., 300 to 3,000 includes 300, 300.5, 2,000, 2234.75, 3,000, etc.).

For the various embodiments, the polyether monoamines can be selected from the group consisting of, but are not limited to, polypropylene glycol monoamine, polyethylene glycol monoamine, and combinations thereof. Examples of the polyether monoamines include, but are not limited to, JEFFAMINE® M-600 and JEFFAMINE® M-1000, both of which are available from Huntsman International LLC. JEFFAMTNE® M-600 is a polyether monoamine having propylene oxide:ethylene oxide mole ratio of 9:1. JEFFAMINE® M-1000 is a polyether monoamine having propylene oxide:ethylene oxide mole ratio of about 3:19.

For the various embodiments, the first epoxy resin used in forming the first adduct may be selected from the group consisting of aromatic epoxy resins, alicyclic epoxy resins, aliphatic epoxy resins, and combinations thereof. Examples of aromatic epoxy resins include, but are not limited to, glycidyl ether compounds of polyphenols, such as hydroquinone, resorcinol, bisphenol A, bisphenol F, 4,4'-dihydroxybiphenyl, phenol novolac, cresol novolac, trisphenol (tris-(4-hydroxyphenyl)methane), 1,1,2,2-tetra(4-hydroxyphenyl)ethane, tetrabromobisphenol A, 2,2-bis(4-hydroxyphenyl)-1,1,1,3,3,3-hexafluoropropane, 1,6-dihydroxynaphthalene, and combinations thereof.

Examples of alicyclic epoxy resins include, but are not limited to, polyglycidyl ethers of polyols having at least one alicyclic ring, or compounds including cyclohexene oxide or cyclopentene oxide obtained by epoxidizing compounds including a cyclohexene ring or cyclopentene ring with an oxidizer. Some particular examples include, but are not limited to, hydrogenated bisphenol A diglycidyl ether; 3,4-epoxycyclohexylmethyl-3,4-epoxycyclohexyl carboxylate; 3,4-epoxy-1-methylcyclohexyl-3,4-epoxy-1-methylhexane carboxylate; 6-methyl-3,4-epoxycyclohexylmethyl-6-methyl-3,4-epoxycyclohexane carboxylate, 3,4-epoxy-3-methylcyclohexylmethyl-3,4-epoxy-3-methylcyclohexane carboxylate; 3,4-epoxy-5-methylcyclohexylmethyl-3,4-epoxy-5-methylcyclohexane carboxylate; bis(3,4-epoxycyclohexylmethyl)adipate; methylene-bis(3,4-epoxycyclohexane); 2,2-bis(3,4-epoxycyclohexyl)propane; dicyclopentadiene diepoxide; ethylene-bis(3,4-epoxycyclohexane carboxylate); dioctyl epoxyhexahydrophthalate; di-2-ethylhexyl epoxyhexahydrophthalate; and combinations thereof.

Examples of aliphatic epoxy resins include, but are not limited to, polyglycidyl ethers of aliphatic polyols or alkylene-oxide adducts thereof, polyglycidyl esters of aliphatic long-chain polybasic acids, homopolymers synthesized by vinyl-polymerizing glycidyl acrylate or glycidyl methacrylate, and copolymers synthesized by vinyl-polymerizing glycidyl acrylate or glycidyl methacrylate and other vinyl monomers. Some particular examples include, but are not limited to glycidyl ethers of polyols, such as 1,4-butanediol diglycidyl ether; 1,6-hexanediol diglycidyl ether; a triglycidyl ether of glycerin; a triglycidyl ether of trimethylol propane; a tetraglycidyl ether of sorbitol; a hexaglycidyl ether of dipentaerythritol; a diglycidyl ether of polyethylene glycol; and a diglycidyl ether of polypropylene glycol; polyglycidyl ethers of polyether polyols obtained by adding one type, or two or more types, of alkylene oxide to aliphatic polyols such as propylene glycol, trimethylol propane, and glycerin; diglycidyl esters of aliphatic long-chain dibasic acids; and combinations thereof.

For one or more embodiments, the first adduct may be formed by a process that includes adding the polyether monoamine dropwise to the first epoxy resin, as discussed herein. The dropwise addition may occur at a temperature that is maintained in a range of from 50 °C to 200 °C while stirring. The dropwise addition may occur in an inert environment. An example of the inert environment includes, but is not limited to, a nitrogen environment. However, the first adducts can be prepared by other processes.

For one or more embodiments, the first epoxy resin and the polyether monoamine can be reacted when forming the first adduct in a molar ratio in a range of from 60.0:1.0 moles epoxy resin:moles polyether monoamine to 2.0:1.0 moles epoxy resin:moles polyether monoamine. For example molar ratios of moles epoxy resin:moles polyether monoamine in a range of from 60.0:1.0 to 2.0:1.0, 40.0:1.0 to 2.0:1.0, 30.0:1.0 to 2.0:1.0, 20.0:1.0 to 2.0:1.0, or 5.0:1.0 to 2.0:1.0 may be employed. For one or more of the embodiments, a molar ratio of 2.0:1.0 epoxy resin:polyether monoamine may be employed. One or more of the molar ratios of epoxy resin:polyether monoamine may help provide that the first adduct is epoxy functional, e.g. the first adduct includes an epoxy functional group.

For one or more embodiments, the second adduct of the present disclosure may be formed as a reaction product of an ethyleneamine and a glycidyl ether. Ethyleneamines may also be referred to as polyethylene amines. Ethyleneamines can be selected from the group consisting of ethylenediamine, diethylenetriamine, triethylenetetramine, tetraethylenepentamine, pentaethylenehexamine, and combinations thereof.

For one or more embodiments, the glycidyl ether may be one or more of the glycidyl ethers discussed herein. For one or more embodiments, the glycidyl ether may be an epoxy functional reaction product of a polyalkylene glycol with a second epoxy resin, where the second epoxy resin may include an epoxy resin, e.g. one or more of the epoxy resins as discussed herein. For one or more embodiments, the second epoxy resin can be selected from the group consisting of bisphenol A epoxy resins, bisphenol F epoxy resins, and combinations thereof. Examples of the polyalkylene glycol include, but are not limited to, polyethylene glycol, polypropylene glycol, polybutylene glycol, and combinations thereof.

For one or more embodiments, the polyalkylene glycol may have molecular weight with a lower limit of 300, 400, 500 or 750 to an upper limit of 1250, 2000, 2500 or 3000, where a range having combinations of the lower limit and upper limit are possible. For example, the polyalkylene glycol may have a molecular weight of 300 to 3000; 400 to 2500; 500 to 2000 or 750 to 1250. In addition to these ranges, the polyether monoamine may have a molecular weight within these ranges. For example, the polyether monoamine may have a molecular weight of 1000.

For one or more embodiments, the glycidyl ether, e.g. the epoxy functional reaction product of a polyalkylene glycol with a second epoxy resin, may be formed by a process that includes reacting the second epoxy resin and the polyalkylene glycol in a molar ratio in a range of from 60.0:1.0 moles second epoxy resin:moles polyalkylene glycol to 2.0:1.0 moles second epoxy resin:moles polyalkylene glycol. For example molar ratios of moles second epoxy resin:moles polyalkylene glycol in a range of from 60.0:1.0 to 2.0:1.0, 40.0:1.0 to 2.0:1.0, 30.0:1.0 to 2.0:1.0, 20.0:1.0 to 2.0:1.0, or 5.0:1.0 to 2.0:1.0 may be employed. The process for forming the glycidyl ether may include adding a catalyst. For one or more embodiments, the catalyst can be a Lewis acid. Examples of the Lewis acid include, but are not limited to, boron trifluoride amine complexes. For one or more embodiments, the catalyst may be employed in a range of 0.01 weight percent to 1.0 weight percent based upon the total weight of the second epoxy resin and the polyalkylene glycol: For example, the catalyst may be employed in a range of 0.02 weight percent to 0.9 weight percent, 0.03 weight percent 0.08 weight percent, or 0.04 weight percent to 0.07 weight percent based upon the total weight of the second epoxy resin and the polyalkylene glycol. For one or more embodiments, the process for forming the glycidyl ether may be performed at a temperature in a range of 130 °C to 220 °C. For example, the process for forming the glycidyl ether may be performed at a temperature in a range of 140 °C to 210 °C or in a range of 150 °C to 200 °C.

Examples of the glycidyl ether, e.g. the epoxy functional reaction product of the polyalkylene glycol with the second epoxy resin include, but are not limited to, POLYPOX® R51, POLYPOX® R35, POLYPOX® R52, and POLYPOX® R53, each available from UPPC GmbH.

The second adduct may be formed by a process that includes adding the glycidyl ether dropwise to the ethyleneamine. The dropwise addition may occur at a temperature that is maintained in a range of from 50 °C to 200 °C while stirring. The dropwise addition may occur in an inert environment. An example of the inert environment includes, but is not limited to, a nitrogen environment. However, the second adduct can be prepared by other processes.

For one or more of the embodiments, the ethyleneamine and the glycidyl ether can be reacted when forming the second adduct in a molar ratio in a range of from 20.0:1.0 moles of ethyleneamine:moles glycidyl ether to 1.0:1.0 moles of ethyleneamine:moles glycidyl ether. For one or more of the embodiments, other ranges for the molar ratio of moles of ethyleneamine:moles glycidyl ether are possible. For example, a molar ratios of moles of ethyleneamine:moles glycidyl ether in a range of from 15.0:1.0 to 1.0:1.0, 13.0:1.0 to 1.0:1.0, 10.0:1.0 to 1.0:1.0, or 5.0:1.0 to 1.0:1.0 may be employed. For one or more of the embodiments, a molar ratio of 12.0:1.0 ethyleneamine:glycidyl ether may be employed.

As discussed herein, the epoxy-adduct hardening agents may be formed as a reaction product of the first adduct and the second adduct. The epoxy-adduct hardening agent may be formed by a process that includes adding the first adduct dropwise to the second adduct. The dropwise addition may occur at a temperature that is maintained in a range of from 50 °C to 200 °C while stirring. The dropwise addition may occur in an inert environment, as discussed herein. The epoxy-adduct hardening agent, however, can be prepared by other processes.

For one or more embodiments, when forming the epoxy-adduct hardening agents the first adduct and the second adduct can be reacted in a weight ratio of the first adduct to the second adduct in a range from 25:1 to 1:1. For example, the first adduct and the second adduct can be reacted in a weight ratio of the first adduct to the second adduct in a range from 20:1 to 1:1, 15:1 to 1:1, 10:1 to 1:1, or 5:1 to 1:1. For one or more embodiments, the first adduct and the second adduct can be reacted in a weight ratio of the first adduct to the second adduct of 4:1. Curable compositions may consist of at least a first component and a second component that chemically react with each other to form a cured composition. For the various embodiments, the first component can be an epoxy resin and the second component can be a hardening agent, where the hardening agent can include the epoxy-adduct hardening agent as disclosed herein. The curable compositions disclosed herein may include other components, as discussed herein. The other components may be included such that a total weight of the other components is not greater than 50 percent of a weight of the epoxy-adduct hardening agent. For example, the other components may be included such that a total weight of the other components is 50 percent of the weight of the epoxy-adduct hardening agent, is not greater than 35 percent of the weight of the epoxy-adduct hardening agent, is not greater than 20 percent of the weight of the epoxy-adduct hardening agent, or is not greater than 5 percent of the weight of the epoxy-adduct hardening agent.

The epoxy resin of the curable compositions disclosed herein may be an epoxy resin as discussed herein. For one or more embodiments, the epoxy resin of the curable composition can be selected from the group consisting of bisphenol A epoxy resins, bisphenol F epoxy resins, and combinations thereof.

The epoxy-adduct hardening agent may be employed in an epoxy equivalent weight to hydrogen equivalent weight ratio of 1.0:1.2 to 1.2:1.0. For example, the epoxy-adduct hardening agent may be employed in an epoxy equivalent weight to hydrogen equivalent weight ratio of 1.0:1.15, 1.0:1.0, or 1.15:1.0. Epoxy equivalent weight (EEW) may be calculated as the mass in grams of epoxy resin containing one mole of epoxide groups. Hydrogen equivalent weight (HEW) may be calculated as mass in grams of hardening agent containing one mole of hydrogen atoms that are capable of opening an epoxy ring.

For one or more of the embodiments, the curable compositions of the present disclosure may include one or more additional hardening agents in addition to the epoxy-adduct hardening agent of the present disclosure. The additional hardening agent can be an adduct. The additional hardening agent can be formed as a reaction product of an epoxy resin and a polyamine, herein including diamines. The polyamine may include a ring structure, e.g. the polyamine may be cyclic. For one or more embodiments, the polyamine is aliphatic. For one or more embodiments, the polyamine is araliphatic. For the various embodiments, the epoxy resin of the additional hardening agent may be an epoxy resin as discussed herein. For one or more of the embodiments, the epoxy resin of the additional hardening agent can be selected from the group consisting of bisphenol A epoxy resins, bisphenol F epoxy resins, and combinations thereof.

Examples of cycloaliphatic diamines that may be used to form the additional hardening agent include, but are not limited to, isophorone diamine, 1,2-diaminocyclohexane, 1,4-bis(aminocyclohexyl)methane, 1,3-bis(aminomethyl)cyclohexane, bis(aminomethyl)norbornane, and combinations thereof. Examples of other diamines that may be used to form the additional hardening agent include, but are not limited to, trimethyl pentamethylediamines, which are aliphatic diamines, m-xylyendiamine, which is an araliphatic diamine, and combinations thereof.

The additional hardening agent may be formed by a process that includes adding the epoxy resin, as discussed herein, dropwise to the polyamine, e.g. the cycloaliphatic diamine. The dropwise addition may occur at a temperature that is maintained in a range of from 50 °C to 200 °C while stirring. The dropwise addition may occur in an inert environment, as discussed herein. The additional hardening agents, however, can be prepared by other processes. For one or more of the embodiments, a molar ratio of moles of polyamine, e.g. the cycloaliphatic diamine,:moles of epoxy resin in a range of from 6.0:1.0 moles polyamine:moles epoxy resin to 2.0:1.0 moles polyamine:moles epoxy resin can be employed when forming the additional hardening agent. For example, molar ratios of moles polyamine:moles of epoxy resin in a range of from 5.0:1.0 to 2.0:1.0, 4.0:1.0 to 2.0:1.0, 3.0:1.0 to 2.0:1.0, may be employed.

The additional hardening agent may be an amine. The amine can be selected from the group consisting of aliphatic polyamines, araliphatic polyamines, cycloaliphatic polyamines, aromatic polyamines, heterocyclic polyamines, polyalkoxy polyamines, and combinations thereof.

Examples of aliphatic polyamines include, but are not limited to, ethylenediamine, diethylenetriamine, triethylenetetramine, trimethyl hexane diamine, hexamethylenediamine, N-(2-aminoethyl)-1,3-propanediamine, N,N'-1,2-ethanediylbis-1,3-propanediamine, dipropylenetriamine, 2-methylpentamethylendiamine, and combinations thereof.

Examples of araliphatic polyamines include, but are not limited to, m-xylylenediamine, and p-xylylenediamine. Examples of cycloaliphatic polyamines include, but are not limited to, 1,3-bisaminocyclohexylamine, isophorone diamine, and 4,4'-methylenebiscyclohexaneamine. Examples of aromatic polyamines include, but are not limited to, m-phenylenediamine, diaminodiphenylmethane, and diaminodiphenylsulfone. Examples of heterocyclic polyamines include, but are not limited to, N-aminoethylpiperazine, 3,9-bis(3-aminopropyl) 2,4,8,10-tetraoxaspiro(5,5)undecane, and combinations thereof.

Examples of polyalkoxy polyamines include, but are not limited to, 4,7-dioxadecane-1,10-diamine; 1-propanamine; (2,1-ethanediyloxy)-bis-(diaminopropylated diethylene glycol) (ANCAMINE® 1922A); poly(oxy(methyl-1,2-ethanediyl)), alpha-(2-aminomethylethyl)omega-(2-aminomethylethoxy) (JEFFAMINE® D-230, D-400); triethyleneglycoldiamine; and oligomers (JEFFAMINE® XTJ-504, JEFFAMINE® XTJ-512); poly(oxy(methyl-1,2-ethanediyl)), alpha,alpha'-(oxydi-2,1-etha nediyl)bis(omega-(aminomethylethoxy)) (JEFFAMINE® XTJ-511); bis(3-aminopropyl)polytetrahydrofuran 350; bis(3-aminopropyl)polytetrahydrofuran 750; poly(oxy(methyl-1,2-ethanediyl)); α-hydro-ω-(2-aminomethylethoxy) ether with 2-ethyl-2-(hydroxymethyl)-1,3-propanediol (JEFFAMINE® T-403); diaminopropyl dipropylene glycol; and combinations thereof.

For one or more embodiments, the epoxy-adduct hardening agent and the additional hardening agent may be mixed to form a hardening mixture. For embodiments including the additional hardening agent, an epoxy equivalent weight to hydrogen equivalent weight, of the hardening mixture, a ratio of 1.0:1.2 to 1.2:1.0 may be employed; for example an epoxy equivalent weight to hydrogen equivalent weight ratio of 1.0:1.15,1.0:1.0, or 1.15:1.0 may be employed.

For one or more embodiments, the curable composition of the present disclosure may also include a diluent. For the various embodiments, the diluent can be a non-reactive diluent.

For the various embodiments, the non-reactive diluent can be a compound that does not participate in a chemical reaction with the epoxy resin and/or the epoxy-adduct hardening agent (and/or the additional hardening agent) of the curable composition during the curing process. Examples of the non-reactive diluent include, but are not limited to, benzyl alcohol, propylene glycol, diethylene glycol monobutyl ether, diisopropylnaphthalene, and combinations thereof.

For one or more embodiments, the curable composition may also include one or more additives. Examples of additives include, but are not limited to, fillers, pigments, dyes, stabilizer, flow-control agents, accelerators, modifiers, and combinations thereof. Various particle sizes and/or particle size distributions of the additive can be used for various applications. Examples of fillers include, but are not limited to, sands, quartz, glass, silicon, barites, limestone, alumina, mica, talc, and combinations thereof.

In one or more embodiments, the curable compositions of the present disclosure are useful in a variety of applications. As discussed, such applications can include those of a grout. Grouts can be used in a variety of applications as a construction material, for example, to embed, connect, fill voids and/or seal joints.

For one or more embodiments where the curable composition is employed as a grout, the curable composition may include one or more additives as discussed herein. For the various embodiments, the curable composition can include a filler. The filler can be included in the curable composition in a range with a lower limit of 30 weight percent of a total weight percent curable composition, 40 weight percent, or 55 weight to an upper limit of 65 weight percent, 75 weight percent, or 80 weight percent where a range having combinations of the lower limit and upper limit are possible and the weight percent is a weight percent of a total weight percent of the curable composition. For example, the filler can be included in the curable composition in a range of 30 weight percent to 80 weight percent; 40 weight percent to 75 weight percent; or 55 weight percent to 65 weight percent of a total weight percent curable composition.

For one or more embodiments where the curable composition is employed as a grout, the filler may be a particle, e.g., sands, quartz, glass, silicon, barites, limestone, alumina, mica, talc, and combinations thereof, as discussed herein. The particle can have an average diameter of in a range with a lower limit of 0.0050 millimeters, 0.0075 millimeters, or 0.010 millimeters to an upper limit of 0.3 millimeters, 0.7 millimeters, or 1.0 millimeters where a range having combinations of the lower limit and upper limit are possible. For example, the particle can have an average diameter of in a range with of 0.0050 millimeters to 1.0 millimeters; 0.0075 millimeters to 0.7 millimeters; or 0.010 millimeters to 0.3 millimeters.

For one or more embodiments, components of the curable composition, e.g. the epoxy resin, the epoxy-adduct hardening agent, and one or more additives, if included, may be combined and applied to a surface, e.g. between tiles. The curable composition can be applied to the surface in a variety of ways, including, but not limited to, trowel, rubber float, squeegee, roller, or cartridge dispenser. During application to the surface the curable composition can be at a temperature in a range with a lower limit of 0 degrees Celsius (°C), 10°C, or 15 °C to an upper limit of 80°C, 85 °C, or 90°C where a range having combinations of the lower limit and upper limit are possible. For example, the curable composition can be applied at a temperature in a range with of 0 °C to 90 °C; 10 °C to 85°C; or 15 °C to 80 °C.

As discussed, in some applications, e.g. grout, water cleanablity may be a desirable property. Herein, water cleanablity refers to a property whereby a portion of a curable composition that has been applied to a surface may be removed with water within a particular interval of time. Herein, as it becomes more difficult, over time, to remove a portion of the curable composition that has been applied to the surface the water cleanablity is decreased. For example, very good water cleanability indicates that a portion of a curable composition is removable from a surface with a minimal application of force, good water cleanablity indicates that a portion of the curable composition is removable from the surface with a greater application of force as compared to very good water cleanablity; moderate water cleanablity indicates that a portion of the curable composition is removable from the surface with a greater application of force as compared to good water cleanablity and so forth until no water cleanablity is reached. No water cleanablity indicates that a portion of the curable composition is not removable from the surface. Water cleanablity helps provide that the grout and/or the film on the surface may be removed for aesthetic and/or functional reasons. Improved water cleanablity, as compared to other compositions, is a desirable property in some applications.

The curable compositions, as disclosed herein, may be cured to obtain a product. For one or more embodiments the curable composition can be cured at a cure temperature in a with a lower limit of 0 degrees Celsius (°C), 10 °C, or 15 °C to an upper limit of 80 °C, 85 °C, or 90 °C where a range having combinations of the lower limit and upper limit are possible. For example, the curable composition can be cured at a temperature in a range with of 0 °C to 90 °C; 10 °C to 85 °C; or 15 °C to 80 °C. For one or more embodiments the curable composition can be cured to obtain a product for a time interval a with a lower limit of 1 hour, 2 hours, or 3 hours to an upper limit of 48 hours, 36 hours, or 24 hours. For example, the curable composition can be cured to obtain a product for a time interval in a range with of 1 hour to 48 hours; 2 hours to 36 hours ; or 3 hours to 24 hours.

. The product, obtained by curing the curable compositions, as disclosed herein, may be used in a variety of applications. For example, the product may be employed to help provide a seal. The product may be employed to mend a cracked or broken pipe or create a seal for a fluid containing vessel, such as a tiled basin or swimming pool. For one or more embodiments, the product may be employed in a potable water application. For one or more embodiments, each component of a curable composition that is cured to obtain the product may be included on a list that provides a guideline for chemicals intended to be used in an application relating to water that is consumable by humans. For example, for one or more embodiments each component of a curable composition that is cured to obtain the product may be included on list provided by the Water, Drinking Water, and Water Protection Coatings Guideline, as accessed at http://www.umweltbundesamt.de/wasser-e/themen/drinking water/beschichtungsleitlinie.htm and updated on October 07, 2008, and incorporated herein by reference.

As discussed, in some applications chemical resistance may be a desirable property. Chemical resistance may be determined by a number of procedures including, but not limited to, visual inspection and softening testing. For example, a product may be exposed one or more chemicals for a predetermined time interval. After the time interval the product may be visually inspected for a change of appearance, e.g. a color change. A product that does not have a change in appearance after exposure to one or more chemicals for the predetermined time interval may be considered to have good chemical resistance. This property may be desirable for applications where the product is exposed to water and/or other chemicals. Additionally, after the time interval the product may be tested for softening, e.g. by fingernail scratch. A product that does not undergo softening after exposure to one or more chemicals for the predetermined time interval may be considered to have good chemical resistance. This property may be desirable to help ensure that a product will maintain integrity and functionality.

### EXAMPLES

In the Examples, various terms and designations for materials were used including, for example, the following:
Ethyleneamine: diethylenetriamine, available from The Dow Chemical Company.
Glycidyl ether: POLYPOX® R51, available from UPPC GmbH.
Cycloaliphatic diamine: isophorone diamine, available from Evonik Industries.
Epoxy resin: D.E.R.™ 331, a bisphenol A epoxy resin (aromatic epoxy resin) available from The Dow Chemical Company.
Polyether monoamine: JEFFAMINE® M-600, available from Huntsman International LLC.
Polyether monoamine: JEFFAMINE® M-1000, available from Huntsman International LLC.
Diluent: benzyl alcohol, available from Bayer AG Germany.
Additional hardening agent: 2-methylpentamethylendiamine, an aliphatic polyamine available from DuPont.
Epoxy resin: D.E.R™ 732P, an aliphatic epoxy resin available from The Dow Chemical Company.
Epoxy resin: POLYPOX® VE 101868, a combination of aromatic epoxy resin and aliphatic epoxy resin, available from UPPC GmbH.
Quartz sand.
Floor tile.

### Adduct (A1₁) formed as a reaction product of an epoxy resin and a polyether monoamine

Adduct A1₁ was prepared as follows. D.E.R.™ 331 (0.30 moles) was added to a three necked flask, mechanically stirred, and heated to 95 °C. JEFFAMINE® M-600 (0.15 moles) was added dropwise to the contents of the flask over a 1 hour period while the contents of the flask were mechanically stirred. Two hours after the addition of the JEFFAMINE® M-600 was completed the contents of the flask were cooled to 60 °C.

### Adduct (A1₂) formed as a reaction product of an epoxy resin and a polyether monoamine

Adduct A1₂ was prepared as follows. D.E.R.™ 331 (0.30 moles) was added to a three necked flask, mechanically stirred, and heated to 95 °C. JEFFAMINE® M-1000 (0.15 moles) was added dropwise to the contents of the flask over a 1 hour period while the contents of the flask were mechanically stirred. Two hours after the addition of the JEFFAMINE® M-1000 was completed the contents of the flask were cooled to 60 °C.

### Adduct (A2) formed as a reaction product of an ethyleneamine and a glycidyl ether

Adduct A2 was prepared as follows. Diethylenetriamine (3.64 moles) was added to a three necked flask, mechanically stirred, and heated to 80 °C. POLYPOX® R51 (0.30 moles) was added dropwise to the contents of the flask over a 1 hour period while the contents of the flask were mechanically stirred. One hour after the addition of the POLYPOX® R51 was completed the contents of the flask were cooled to 50 °C.

### Example 1, epoxy-adduct hardening agent

Example 1, an epoxy-adduct hardening agent, was prepared as follows. Adduct A2 (43.0 grams) was added to a three necked flask, mechanically stirred, and heated to 80 °C. Adduct A1₁ (11.0 grams) was added to the contents of the flask while the contents of the flask were mechanically stirred to form the epoxy-adduct hardening agent. One hour after the addition of the Adduct A1₁ was completed the contents of the flask were cooled to 60 °C.

### Example 2, epoxy-adduct hardening agent

Example 2, an epoxy-adduct hardening agent, was prepared as follows. Adduct A2 (43.0 grams) was added to a three necked flask, mechanically stirred, and heated to 80 °C. Adduct A1₂ (11.0 grams) was added to the contents of the flask while the contents of the flask were mechanically stirred to form the epoxy-adduct hardening agent. One hour after the addition of the adduct A1₂ was completed the contents of the flask were cooled to 60 °C.

### Additional hardening agent adduct (A3) formed as a reaction product of an epoxy resin and a cycloaliphatic diamine

Adduct A3, an additional hardening agent, was prepared as follows. Isophorone diamine (3.00 moles) was added to a three necked flask, mechanically stirred, and heated to 80 °C. D.E.R.™ 331 (0.75 moles) was added dropwise to the contents of the flask over a 1 hour period while the contents of the flask were mechanically stirred. One hour after the addition of the D.E.R.™ 331 was completed the contents of the flask were cooled to 60 °C.

### Hardening mixture 1

Hardening mixture 1 was prepared as follows. Adduct A3 (27.0 grams), benzyl alcohol (10.0 grams), and 2-methylpentamethylendiamine (9.0 grams) were added to the flask that contained Example 1 while the contents of the flask were mechanically stirred and the temperature was maintained at 60 °C.

### Hardening mixture 2

Hardening mixture 2 was prepared as follows. Adduct A3 (27.0 grams), benzyl alcohol (10.0 grams), and 2-methylpentamethylendiamine (9.0 grams) were added to the flask that contained Example 2 while the contents of the flask were mechanically stirred and the temperature was maintained at 60 °C.

### Comparative Example A

Comparative Example A, a hardening mixture, was prepared as follows. Adduct A2 (43.0 grams), adduct A3 (27.0 grams), benzyl alcohol (10.0 grams), and 2-methylpentamethylendiamine (9.0 grams) were added to a three necked flask, mechanically stirred, and heated to 80 °C. D.E.R™ 732P (11.0 grams) was added to the contents of the flask while the contents of the flask were mechanically stirred. One hour after the addition of the D.E.R™ 732P was completed the contents of the flask were cooled to 60 °C.

### Examples 3-4, Curable Compositions

Example 3, a curable composition, was prepared as follows. POLYPOX® VE 101868 (36.25 grams) was mixed via a spatula with Example 1 (13.75 grams) to provide Example 3. Quartz sand (105.0 grams) was mixed into Example 3. Example 4 was prepared as Example 3, with the change: Example 2 (13.75 grams) replaced Example 1. Quartz sand (105.0 grams) was mixed into Example 4.

### Comparative Example B

Comparative Example B was prepared as follows. POLYPOX® VE101868 (36.25 grams) was mixed via a spatula with Comparative Example A (13.75 grams) to provide Comparative Example B, a curable composition. Quartz sand (105.0 grams) was mixed into Comparative Example B.

A comparative evaluation for water cleanability of Examples 3-4, each including the quartz sand, and Comparative Example B, also including the quartz sand, was performed by first applying twelve swaths of each curable composition respectively to a pair floor tiles, six swaths per each floor tile. At 10 minute intervals one swath of each of the curable compositions was rubbed with a sponge saturated with water (e.g., washed) at a temperature of 8 °C to 18 °C. Table I shows the results of the comparative evaluation for water cleanablity. For the comparative evaluation for water cleanability: very good water cleanability indicates that the swath of the curable composition was removed from the floor tile with a minimal application of force; good water cleanablity indicates that the swath of the curable composition was removed from the floor tile with a greater application of force as compared to very good water cleanablity; moderate water cleanablity indicates that the swath of the curable composition was removed from the floor tile with a greater application of force as compared to good water cleanablity; poor water cleanablity indicates that a first portion of the swath of the curable composition was removed from the floor tile with a greater application of force as compared to moderate water cleanablity and a second portion of the swath of the curable composition was not removable from the floor tile; no water cleanablity indicates that the swath of the curable composition was not removable from the floor tile.

**Table I**

| Comparative Evaluation for Water Cleanability | | | |
|---|---|---|---|
| | Example 3 | Example 4 | Comparative Example B |
| Swath 1 (washed 10 minutes after application) | Very good water cleanability | Very good water cleanability | Very good water cleanability |
| Swath 2 (washed 20 minutes after application) | Very good water cleanablity | Very good water cleanability | Good water cleanability |
| Swath 3 (washed 30 minutes after application) | Very good water cleanability | Very good water cleanability | Moderate water cleanability |
| Swath 4 (washed 40 minutes after application) | Good water cleanability | Good water cleanability | Moderate water cleanability |
| Swath 5 (washed 50 minutes after application) | Good water cleanability | Good water cleanability | Poor water cleanabiltiy |
| Swath 6 (washed 60 minutes after application) | Good water cleanability | Good water cleanability | Poor water cleanabiltiy |
| Swath 7 (washed 70 minutes after application) | Moderate water cleanability | Moderate water cleanability | Poor water cleanabiltiy |
| Swath 8 (washed 80 minutes after application) | Moderate water cleanability | Moderate water cleanability | Very poor water cleanability |
| Swath 9 (washed 90 minutes after application) | Poor water cleanabiltiy | Poor water cleanabiltiy | Very poor water cleanability |
| Swath 10 (washed 100 minutes after application) | Very poor water cleanability | Very poor water cleanability | No water cleanability |
| Swath 11 (washed 110 minutes after application) | Very poor water cleanability | Very poor water cleanability | No water cleanability |
| Swath 12 (washed 120 minutes after application) | No water cleanability | No water cleanability | No water cleanability |

The data in Table I show that Examples 3 and 4 each have improved water cleanablity as compared to Comparative Example B.

### Examples 5-6, Products obtained by curing the curable compositions of Examples 3-4

Examples 5-6 were prepared as follows. Films (0.2 millimeter) of Examples 3-4 (including the quartz sand), corresponding to Example 5 and Example 6 respectively, were cured for four hours at 80 °C.

The chemical resistance of Examples 5-6 was determined by placing the films of Examples 5-6 individually into Petri dishes. Cotton pads were individually saturated with one chemical. Unless otherwise indicated all percentages are by weight. The saturated cotton pads were then individually placed on one of the films and the Petri dishes were covered for twenty-four hours. After the twenty-four hours the films were visually inspected for any change of appearance, e.g., color, and tested for softening by fingernail scratch. Table II shows the results of the visually inspections and the softening testing.

**Table II**

| Chemical | Chemical Resistance Test | Example 5 | Example 6 |
|---|---|---|---|
| Water | Appearance Inspection | unchanged | unchanged |
| | Softening Test | no softening | no softening |
| Acetic acid 5% | Appearance Inspection | unchanged | unchanged |
| | Softening Test | no softening | no softening |
| Sulfuric acid 0.0001 mol/L | Appearance Inspection | unchanged | unchanged |
| | Softening Test | no softening | no softening |
| Sulfuric acid 0.1 mol/L | Appearance Inspection | unchanged | unchanged |
| | Softening Test | no softening | no softening |
| Sodium hydroxide 0.0001 mol/L | Appearance Inspection | unchanged | unchanged |
| | Softening Test | no softening | no softening |
| Sodium hydroxide 0.1 mol/L | Appearance Inspection | unchanged | unchanged |
| | Softening Test | no softening | no softening |
| Citric acid 0.0005% | Appearance Inspection | unchanged | unchanged |
| | Softening Test | no softening | no softening |
| Citric acid 0.5% | Appearance Inspection | unchanged | unchanged |
| | Softening Test | no softening | no softening |
| Calcium hypochloride 0.6 mg Cl₂/L | Appearance Inspection | unchanged | unchanged |
| | Softening Test | no softening | no softening |
| Calcium hypochloride 0.6 g Cl₂/L | Appearance Inspection | unchanged | unchanged |
| | Softening Test | no softening | no softening |
| Sodium hypochloride 0.6 mg Cl₂/L | Appearance Inspection | unchanged | unchanged |
| | Softening Test | no softening | no softening |
| Sodium hypochloride 0.6 g Cl₂/L | Appearance Inspection | unchanged | unchanged |
| | Softening Test | no softening | no softening |

The data in Table II show that Examples 5-6 show chemical resistance relating to appearance because after the exposure to the chemicals the appearance of Examples 5-6 was unchanged. The data in Table II show that Examples 5-6 show chemical resistance relating to softening because after the exposure to the chemicals there was no observed softening of Examples 5-6.

## Claims

1. An epoxy-adduct hardening agent formed as a reaction product of a first adduct and a second adduct, where the first adduct is formed as a reaction product of a first epoxy resin and a polyether monoamine and the second adduct is formed as a reaction product of an ethyleneamine and a glycidyl ether.

2. The epoxy-adduct hardening agent of claim 1, where the polyether monoamine is selected from the group consisting of a polypropylene glycol monoamine, a polyethylene glycol monoamine, and combinations thereof.

3. The epoxy-adduct hardening agent of claim 2, where the polyethylene glycol monoamine or polypropylene glycol monoamine has molecular weight of 600 to 1000.

4. The epoxy-adduct hardening agent of claim 1, where the first epoxy resin is selected from the group consisting of bisphenol A epoxy resins, bisphenol F epoxy resins, and combinations thereof.

5. The epoxy-adduct hardening agent of claim 1, where the ethyleneamine is diethylenetriamine and the glycidyl ether is an epoxy functional reaction product of a polyalkylene glycol with a second epoxy resin is selected from the group consisting of bisphenol A epoxy resins, bisphenol F epoxy resins, and combinations thereof.

6. The epoxy-adduct hardening agent of claim 1, where the first adduct is epoxy functional and has a molar ratio of the first epoxy resin to the polyether monoamine that is at least 2 to 1.

7. A curable composition comprising:
an epoxy resin; and
the epoxy-adduct hardening agent as in any one of claims 1-6.

8. The curable composition of claim 7, further including a first additional hardening agent formed as a reaction product of a third epoxy resin and a cycloaliphatic diamine.

9. The curable composition of claim 8, where the cycloaliphatic diamine is isophorone diamine and the third epoxy resin is selected from the group consisting of bisphenol A epoxy resins, bisphenol F epoxy resins, and combinations thereof.

10. The curable composition of any one of claims 7-9, further including a second additional hardening agent.

11. The curable composition of claim 10, where the second additional hardening agent is 2-methyl pentamethylene diamine.

12. The curable composition of any one of claims 7-11, further including benzyl alcohol.

13. The curable composition of any one of claims 7-11, further including a filler.

14. A product obtained by curing the curable composition as in any one of claims 7-13.

15. A method of forming an epoxy-adduct hardening agent comprising:
forming a first adduct as a reaction product of a first epoxy resin and a polyether monoamine;
forming a second adduct as a reaction product of an ethyleneamine and a glycidyl ether; and
forming the epoxy-adduct hardening agent by reacting the first adduct and the second adduct.

## Patentansprüche

1. Ein Epoxid-Addukt-Härter, der als ein Reaktionsprodukt aus einem ersten Addukt und einem zweiten Addukt gebildet wird, wobei das erste Addukt als ein Reaktionsprodukt aus einem ersten Epoxidharz und einem Polyethermonoamin gebildet wird und das zweite Addukt als ein Reaktionsprodukt aus einem Ethylenamin und einem Glycidylether gebildet wird.

2. Epoxid-Addukt-Härter gemäß Anspruch 1, wobei das Polyethermonoamin aus der Gruppe ausgewählt ist, die aus einem Polypropylenglycolmonoamin, einem Polyethylenglycolmonoamin und Kombinationen davon besteht.

3. Epoxid-Addukt-Härter gemäß Anspruch 2, wobei das Polyethylenglycolmonoamin oder Polypropylenglycolmonoamin ein Molekulargewicht von 600 bis 1000 aufweist.

4. Epoxid-Addukt-Härter gemäß Anspruch 1, wobei das erste Epoxidharz aus der Gruppe ausgewählt ist, die aus Bisphenol-A-Epoxidharzen, Bisphenol-F-Epoxidharzen und Kombinationen davon besteht.

5. Epoxid-Addukt-Härter gemäß Anspruch 1, wobei das Ethylenamin Diethylentriamin ist und der Glycidylether ein epoxidfunktionelles Reaktionsprodukt aus einem Polyalkylenylglycol mit einem zweiten Epoxidharz, ist ausgewählt aus der Gruppe, die aus Bisphenol-A-Epoxidharzen, Bisphenol-F-Epoxidharzen und Kombinationen davon besteht, ist.

6. Epoxid-Addukt-Härter gemäß Anspruch 1, wobei das erste Addukt epoxidfunktionell ist und ein Molverhältnis des ersten Epoxidharzes zu dem Polyethermonoamin aufweist, das mindestens 2 zu 1 beträgt.

7. Eine härtbare Zusammensetzung, die Folgendes beinhaltet:
ein Epoxidharz; und
den Epoxid-Addukt-Härter gemäß einem der Ansprüche 1-6.

8. Härtbare Zusammensetzung gemäß Anspruch 7, die ferner einen ersten zusätzlichen Härter umfasst, der als ein Reaktionsprodukt aus einem dritten Epoxidharz und einem cycloaliphatischen Diamin gebildet wird.

9. Härtbare Zusammensetzung gemäß Anspruch 8, wobei das cycloaliphatische Diamin Isophorondiamin ist und das dritte Epoxidharz aus der Gruppe ausgewählt ist, die aus Bisphenol-A-Epoxidharzen, Bisphenol-F-Epoxidharzen und Kombinationen davon besteht.

10. Härtbare Zusammensetzung gemäß einem der Ansprüche 7-9, die ferner einen zweiten zusätzlichen Härter umfasst.

11. Härtbare Zusammensetzung gemäß Anspruch 10, wobei der zweite zusätzliche Härter 2-Methylpentamethylendiamin ist.

12. Härtbare Zusammensetzung gemäß einem der Ansprüche 7-11, die ferner Benzylalkohol umfasst.

13. Härtbare Zusammensetzung gemäß einem der Ansprüche 7-11, die ferner einen Füller umfasst.

14. Ein Produkt, das durch Härter der härtbaren Zusammensetzung gemäß einem der Ansprüche 7-13 erhalten wird.

15. Ein Verfahren zum Bilden eines Epoxid-Addukt-Härters, das Folgendes beinhaltet:
Bilden eines ersten Addukts als ein Reaktionsprodukt aus einem ersten Epoxidharz und einem Polyethermonoamin;
Bilden eines zweiten Addukts als ein Reaktionsprodukt aus einem Ethylenamin und einem Glycidylether; und
Bilden des Epoxid-Addukt-Härters durch Reagierenlassen des ersten Addukts und des zweiten Addukts.

## Revendications

1. Un agent de durcissement à base d'adduit d'époxy formé en tant qu'un produit de la réaction d'un premier adduit et d'un deuxième adduit, où le premier adduit est formé en tant qu'un produit de la réaction d'une première résine époxy et d'une polyéther monoamine et le deuxième adduit est formé en tant qu'un produit de la réaction d'une éthylèneamine et d'un éther glycidylique.

2. L'agent de durcissement à base d'adduit d'époxy de la revendication 1, où la polyéther monoamine est sélectionnée dans le groupe constitué d'une polypropylène glycol monoamine, d'une polyéthylène glycol monoamine, et de combinaisons de celles-ci.

3. L'agent de durcissement à base d'adduit d'époxy de la revendication 2, où la polyéthylène glycol monoamine ou la polypropylène glycol monoamine a une masse moléculaire allant de 600 à 1 000.

4. L'agent de durcissement à base d'adduit d'époxy de la revendication 1, où la première résine époxy est sélectionnée dans le groupe constitué de résines époxy au bisphénol A, de résines époxy au bisphénol F, et de combinaisons de celles-ci.

5. L'agent de durcissement à base d'adduit d'époxy de la revendication 1, où l'éthylèneamine est la diéthylènetriamine et l'éther glycidylique est un produit de réaction fonctionnel époxy d'un polyalkylèneglycol avec une deuxième résine époxy est sélectionnée dans le groupe constitué de résines époxy au bisphénol A, de résines époxy au bisphénol F, et de combinaisons de celles-ci.

6. L'agent de durcissement à base d'adduit d'époxy de la revendication 1, où le premier adduit est époxy fonctionnel et a un rapport molaire de la première résine époxy à la polyéther monoamine qui est d'au moins 2 à 1.

7. Une composition traitable comprenant :
une résine époxy ; et
l'agent de durcissement à base d'adduit d'époxy tel que dans l'une quelconque des revendications 1 à 6.

8. La composition traitable de la revendication 7, comportant en sus un premier agent de durcissement supplémentaire formé en tant qu'un produit de la réaction d'une troisième résine époxy et d'une diamine cycloaliphatique.

9. La composition traitable de la revendication 8, où la diamine cycloaliphatique est une isophorone diamine et la troisième résine époxy est sélectionnée dans le groupe constitué de résines époxy au bisphénol A, de résines époxy au bisphénol F, et de combinaisons de celles-ci.

10. La composition traitable de l'une quelconque des revendications 7 à 9, comportant en sus un deuxième agent de durcissement supplémentaire.

11. La composition traitable de la revendication 10, où le deuxième agent de durcissement supplémentaire est la 2-méthylpentaméthylènediamine.

12. La composition traitable de l'une quelconque des revendications 7 à 11, comportant en sus de l'alcool benzylique.

13. La composition traitable de l'une quelconque des revendications 7 à 11, comportant en sus une charge.

14. Un produit obtenu par le traitement de la composition traitable telle que dans l'une quelconque des revendications 7 à 13.

15. Une méthode de formation d'un agent de durcissement à base d'adduit d'époxy comprenant :
la formation d'un premier adduit en tant qu'un produit de la réaction d'une première résine époxy et d'une polyéther monoamine ;
la formation d'un deuxième adduit en tant qu'un produit de la réaction d'une éthylèneamine et d'un éther glycidylique ; et
la formation de l'agent de durcissement à base d'adduit d'époxy en faisant réagir le premier adduit et le deuxième adduit.
